# EUROPEAN PATENT SPECIFICATION

(11) **EP 3 095 621 B1**
(45) Date of publication and mention of the grant of the patent: **23.05.2018**
(21) Application number: 15737509.8
(22) Date of filing: 14.01.2015
(51) Int. Cl.: B60C 11/03, B60C 11/12

(54) **PNEUMATIC TIRE**
LUFTREIFEN
PNEU

(30) Priority: 15.01.2014 JP 2014005385
(43) Date of publication of application: 23.11.2016
(73) Proprietor: Bridgestone Corporation, Tokyo 104-8340 (JP)
(72) Inventor: TAKEI, Ataka, Kodaira-shi Tokyo 187-8531 (JP)
(74) Representative: Oxley, Robin John George
(86) International application number: PCT/JP2015/050836
(87) International publication number: WO 2015/108080

(56) References cited:
- WO-A1-2015/108079
- DE-A1- 4 300 695
- JP-A- H05 319 023
- JP-A- 2010 215 075
- US-A1- 2009 199 943

## Description

### Technical Field

The present invention relates to a pneumatic tire.

### Background Art

Among tires having a specified rotational direction, there is a tire having a tread in which are formed: a plurality of inclined grooves that extend in an opposite direction from a tire rotational direction and outward in a tire width direction from end portions on the tire equator side; and transverse grooves that extend in the opposite direction from the tire rotational direction and outward in the tire width direction from end portions on the tire equator side and intersect the inclined grooves (e.g., Japanese Patent No. 4,656,239). Attention is also drawn to the disclosures of JP05-319023 and US2009/0199943.

### SUMMARY OF INVENTION

### Technical Problem

In the above-described tire, wet performance and performance on snow can be ensured by the inclined grooves and inclined secondary grooves, but there is still room for improvement regarding performance on snow.

It is a problem of the present invention to improve performance on snow.

### Solution to Problem

A pneumatic tire of the present invention is a pneumatic tire as claimed in claim 1. Advantageous Effects of Invention

As described above, the pneumatic tire of the present invention can improve performance on snow.

### BRIEF DESCRIPTION OF DRAWINGS

FIG. 1 is a developed view of a tread of a pneumatic tire of an embodiment of the present invention.
FIG. 2 is an enlarged view of the section indicated by arrow 2 in FIG. 1.

### DESCRIPTION OF EMBODIMENT

A pneumatic tire (hereinafter simply called "the tire") 10 pertaining to an embodiment of the present invention will be described below. The tire 10 of the present embodiment is a tire having a specified rotational direction and is used mainly in passenger cars. It should be noted that the present invention is not limited to this configuration and may also be used in pneumatic tires for other purposes. For example, the present invention may also be used as a pneumatic tire for light trucks, for aircraft, and for construction vehicles.

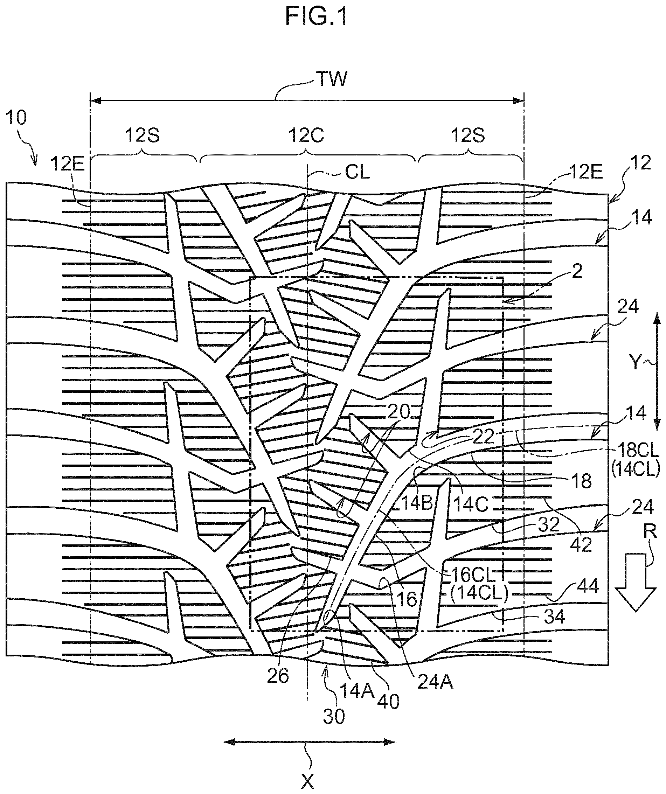

In FIG. 1 is shown a developed view of a tread 12 of the tire 10. It should be noted that arrow X in FIG. 1 indicates a tire width direction, which is a direction parallel to the axis (rotational axis) of the tire 10, and arrow Y indicates a circumferential direction of the tire 10 (hereinafter appropriately called "a tire circumferential direction"). Furthermore, reference sign CL indicates the tire equator and reference sign R indicates the rotational direction of the tire 10. In the present embodiment, the tire equator CL side along the tire width direction will be called the "a tire width direction inner side" and an opposite side of the tire equator CL will be called the "a tire width direction outer side."

Furthermore, reference signs 12E in FIG. 1 indicate tread ends that are tread width TW end portions (tire width direction end portions) of the tread 12.

The tire 10 of the present embodiment can use as its internal structure the same internal structure as that of conventionally known pneumatic tires. For this reason, description relating to the internal structure of the tire 10 is omitted.

As shown in FIG. 1, a plurality of first primary grooves 14 are disposed in the tread 12, which configures the region of the tire 10 that contacts the road surface, and are spaced (a fixed distance in the present embodiment) apart from each other in the tire circumferential direction. Each of the first primary grooves 14 is configured to include: a first groove portion 16 that extends in an opposite direction from a tire rotational direction and obliquely with respect to the tire width direction from an inner end portion 14A positioned in a tread center portion 12C; and a second groove portion 18 that extends outward in the tire width direction from the first groove portion 16 to the tread end 12E such that an angle formed by the second groove portion 18 with respect to the tire width direction becomes smaller than the angle formed by the first groove portion 16 with respect to the tire width direction.

It should be noted that, in the present embodiment, a range equal to 1/2×TW and centered on the tire equator CL so as to span both tire width direction sides thereof serves as the tread center portion 12C. Additionally, both tire width direction sides of the tread center portion 12C serve as tread shoulder portions 12S.

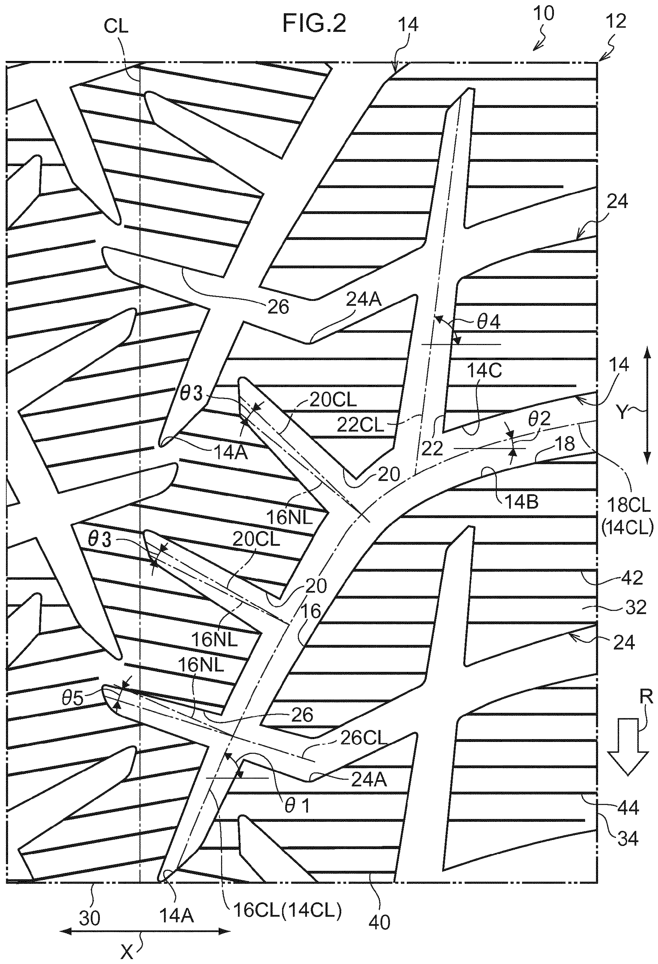

As shown in FIG. 2, the first groove portions 16 are inclined an angle θ1 with respect to the tire width direction. The angle θ1 is an angle on the acute angle side with respect to the tire width direction in sections (hereinafter appropriately called "groove portion centerlines") 16CL, corresponding to the first groove portions 16, of lines (hereinafter appropriately called "groove centerlines") 14CL passing through the groove width centers of the first primary grooves 14, and is set in a range of 60 to 90 degrees.

Furthermore, the second groove portions 18 are inclined an angle θ2 smaller than angle θ1 with respect to the tire width direction. The angle θ2 is an angle on the acute angle side with respect to the tire width direction in sections (hereinafter appropriately called "groove portion centerlines") 18CL, corresponding to the second groove portions 18, of the groove centerlines 14CL of the first primary grooves 14, and is set in a range of 0 to 20 degrees.

Furthermore, the groove width of the first primary grooves 14 is wider at the tread ends 12E than at the inner end portions 14A.

As shown in FIG. 1 and FIG. 2, first secondary grooves 20 that extend in the opposite direction from the tire rotational direction from the first groove portions 16 in a normal line direction of the first groove portions 16 and terminate in the tread center portion 12C are formed in the tread 12. Specifically, the first secondary grooves 20 terminate inside a later-described rib-shaped land portion 30 formed on the tire equator CL. Furthermore, a plurality (in the present embodiment, two) of the first secondary grooves 20 are disposed spaced apart from each other in the extension direction (a direction along the groove portion centerlines 16CL) of each of the first groove portions 16.

It should be noted that "normal line direction of the first groove portions 16" here includes directions along normal lines 16NL of the groove portion centerlines 16CL and directions inclined in the range of ±10 degrees with respect to those normal lines 16NL (see FIG. 2).

In the present embodiment, as shown in FIG. 2, groove centerlines 20CL of the first secondary grooves 20 are inclined an angle θ3 with respect to the normal lines NL of the first groove portions 16. It should be noted that the groove centerlines 20CL of the first secondary grooves 20 are lines passing through the groove width centers of the first secondary grooves 20. Furthermore, angle θ3 is set in the range of -10 degrees to 10 degrees with respect to the normal lines NL.

As shown in FIG. 1 and FIG. 2, second secondary grooves 22 that extend in the opposite direction from the tire rotational direction from the second groove portions 18 toward the tread ends 12E and terminate without reaching the first primary grooves 14 adjacent thereto in the opposite direction from the tire rotational direction are formed in the tread 12. Specifically, the second secondary grooves 22 terminate inside later-described rib-shaped land portions 32 formed on the tire width direction outer sides of the rib-shaped land portion 30. Furthermore, an angle θ4 formed by the second secondary grooves 22 with respect to the tire width direction is larger than the angle θ2 of the second groove portions 18. The angle θ4 is an angle that lines (hereinafter appropriately called "groove centerlines") 22CL passing through the groove width centers of the second secondary grooves 22 form with respect to the tire width direction, and is set in the range of 70 to 110 degrees.

Furthermore, second primary grooves 24 that extend in the opposite direction from the tire rotational direction from inner end portions 24A positioned in the tread center portion 12C to the tread ends 12E while inclining with respect to the tire width direction are formed in the tread 12 between the first primary grooves 14 adjacent thereto in the tire circumferential direction. In the present embodiment, the second primary grooves 24 extend substantially parallel to the second groove portions 18 of the first primary grooves 14.

Furthermore, the second primary grooves 24 intersect the second secondary grooves 22 extending from the first primary grooves 14 adjacent thereto in the tire rotational direction.

Moreover, third secondary grooves 26 that extend in the opposite direction from the tire rotational direction from the inner end portions 24A of the second primary grooves 24 and intersect the first groove portions 16 of the first primary grooves 14 adjacent thereto in the opposite direction from the tire rotational direction are formed in the tread 12. The third secondary grooves 26 intersect, on the inner end portion 14A side of the first secondary grooves 20 extending from the first groove portions 16, the first groove portions 16 of the first primary grooves 14 adjacent thereto in the opposite direction from the tire rotational direction. Furthermore, the third secondary grooves 26 terminate inside the later-described rib-shaped land portion 30 formed on the tire equator CL. It should be noted that, although in the present embodiment the third secondary grooves 26 cross over the tire equator CL, the present invention is not limited to this and may also have a configuration where the third secondary grooves 26 terminate before crossing over the tire equator CL.

Furthermore, the third secondary grooves 26 extend in a normal line direction of the first groove portions 16 of the first primary grooves 14 adjacent thereto in the opposite direction from the tire rotational direction. In the present embodiment, as shown in FIG. 2, groove centerlines 26L of the third secondary grooves 26 are inclined an angle θ5 with respect to the normal line NL of the first groove portions 16. It should be noted that the groove centerlines 26CL of the third secondary grooves 26 are lines passing through the groove width centers of the third secondary grooves 26. Furthermore, angle θ5 is, like angle θ3, set in the range of -10 degrees to 10 degrees with respect to the normal line 16NL.

As shown in FIG. 1, the first primary grooves 14, the first secondary grooves 20, the second secondary grooves 22, the second primary grooves 24, and the third secondary grooves 26 are disposed on both tire width direction sides of the tire equator CL. Furthermore, in the present embodiment, the first primary grooves 14 on one side of the tire equator CL and the first primary grooves 14 on the other side of the tire equator CL are arranged a half pitch offset from each other in the tire circumferential direction. It should be noted that the half pitch here is a half pitch when the distance between the first primary grooves 14 adjacent to each other in the tire circumferential direction serves as one pitch.

Furthermore, in the tread 12 of the present embodiment, only the first primary grooves 14, the first secondary grooves 20, the second secondary grooves 22, the second primary grooves 24, and the third secondary grooves 26 are formed as grooves that do not close (grooves whose groove wall surfaces do not contact each other) when they contact the ground. It should be noted that the present invention is not limited to the above-described configuration and that other grooves may also be formed in the tread 12 in addition to the first primary grooves 14, the first secondary grooves 20, the second secondary groves 22, the second primary grooves 24, and the third secondary grooves 26.

A rib-shaped land portion 30 continuous in the tire circumferential direction is formed on the tire equator CL in the tread 12. It should be noted that the "rib-shaped land portion 30 continuous in the tire circumferential direction" here includes a state in which the rib-shaped land portion 30 is continuous in the tire circumferential direction inside the contact patch. Furthermore, the rib-shaped land portion 30 is a land portion defined by the first primary grooves 14 on both sides in the tire width direction, the second secondary grooves 22 on both sides in the tire width direction, the second primary grooves 24 on both sides in the tire width direction, and the third secondary grooves 26 on both sides in the tire width direction.

Furthermore, rib-shaped land portions 32 and rib-shaped land portions 34 that are continuous in the tire width direction are formed in the tread 12 on the tire width direction outer sides of the rib-shaped land portion 30. The rib-shaped land portions 32 are land portions defined in the tread 12 by the second primary grooves 24 and the first primary grooves 14 and third secondary grooves 26 adjacent to the second primary grooves 24 in the opposite direction from the tire rotational direction. The rib-shaped land portions 34 are land portions defined by the second primary grooves 24 and the first primary grooves 14 and second secondary grooves 22 adjacent to the second primary grooves 24 in the tire rotational direction. It should be noted that the rib-shaped land portions 32 and the rib-shaped land portions 34 are adjacent to each other in the tire circumferential direction.

As shown in FIG. 1, a plurality of sipes 40 that extend in a direction (in the present embodiment, an oblique direction with respect to the tire width direction) intersecting the tire circumferential direction and are spaced apart from each other in the tire circumferential direction are disposed in the rib-shaped land portion 30.

It should be noted that the "sipes" here refer to slits set to a groove width such that the groove wall surfaces contact each other and close when the slits contact the ground.

A plurality of sipes 42 that extend in a direction (in the present embodiment, the tire width direction) intersecting the tire circumferential direction and are spaced apart from each other in the tire circumferential direction are disposed in each of the rib-shaped land portions 32.

Furthermore, a plurality of sipes 44 that extend in a direction (in the present embodiment, the tire width direction) intersecting the tire circumferential direction and are spaced apart from each other in the tire circumferential direction are disposed in each of the rib-shaped land portions 34.

Furthermore, in the rib-shaped land portion 30, the area of the road surface is largest in the range of one pitch of the first primary grooves 14 of the tire 10. That is, in the range of one pitch of the first primary grooves 14 of the tire 10, the area of the road surface is larger in the rib-shaped land portion 30 than in the rib-shaped land portions 32 and the rib-shaped land portions 34.

Next, the action and effects of the tire 10 will be described.

In the tire 10, the first primary grooves 14 extend in the opposite direction from the tire rotational direction from the inner end portions 14A positioned in the tread center portion 12C to the tread ends 12E, so when traveling on snow-covered road surfaces, long snow ridges can be formed by the first primary grooves 14. Because of this, the shearing force of the snow ridges (hereinafter appropriately called "snow ridge-shearing force") is improved and the performance of the tire 10 on snow (acceleration performance on snow and braking performance on snow) utilizing the snow ridge-shearing force is improved. Furthermore, when traveling on wet road surfaces, the drain water flows smoothly inside the first primary grooves 14 from the inner end portions 14A toward the tread ends 12E, so the ability of the tire 10 to expel water is improved. Moreover, the groove width of the first primary grooves 14 is wider at the tread ends 12E, where the angle formed by the first primary grooves 14 with respect to the tire width direction is smaller, than at the inner end portions 14A, so the snow ridges formed at the tread ends 12E are fatter, and acceleration performance on snow and braking performance on snow are improved.

Furthermore, each of the first primary grooves 14 is configured to include: the first groove portion 16 that extends in the opposite direction from the tire rotational direction from the inner end portion 14A while inclining the angle θ1 with respect to the tire width direction; and the second groove portion 18 that extends outward in the tire width direction from the first groove portion 16 to the tread end 12E in such that an angle formed by the second groove portion 18 with respect to the tire width direction becomes smaller than the angle formed by the first groove portion 16 with respect to the tire width direction. For this reason, edges 14B (see FIG. 1) and edges 14C (see FIG. 1) of the first primary grooves 14 exhibit an edge effect in a wide range in the tire circumferential direction and the tire width direction, so performance on snow resulting from the edge effect is improved. Moreover, when traveling on wet road surfaces, the flow of water inside the first primary grooves 14 becomes smooth, so water expulsion performance is improved. It should be noted that the edges 14B of the first primary grooves 14 are the open edge portions on the tire rotational direction sides of the first primary grooves 14 and that the edges 14C of the first primary grooves 14 are the open edge portions on the opposite sides of the tire rotational direction sides of the first primary grooves 14.

Furthermore, in the tire 10, the first secondary grooves 20 extend in the opposite direction from the tire rotational direction from the first groove portions 16 in a normal line direction of the first groove portions 16 and terminate inside the rib-shaped land portion 30, so when traveling on snow-covered road surfaces, snow can be trapped inside the first secondary grooves 20. For this reason, acceleration performance on snow is improved by the shearing force of the snow ridges formed by the first secondary grooves 20. Furthermore, when braking on snow, the snow inside the first groove portions 16 and the snow inside the first secondary grooves 20 push against each other in the sections where the first groove portions 16 and the first secondary grooves 20 merge, thereby forming hard snow ridges so that braking performance on snow is improved.

Furthermore, the first secondary grooves 20 extend in a normal line direction of the first groove portions 16, so the rigidity of the land portion corner portions (the corner portions of the rib-shaped land portion 30) formed between the first groove portions 16 and the first secondary grooves 20 can be ensured. Because of this, the ground contact of the rib-shaped land portion 30 is improved and maneuverability on snow is improved.

In the tire 10, the second secondary grooves 22 extend in the opposite direction from the tire rotational direction from the second groove portions 18 toward the tread ends 12E, so when traveling on snow-covered road surfaces, the snow becomes trapped in the second secondary grooves 22 and so acceleration performance on snow is improved. Moreover, when braking on snow, the snow inside the second groove portions 18 and the snow inside the second secondary grooves 22 push against each other in the sections where the second groove portions 18 and the second secondary grooves 22 merge, thereby forming hard snow ridges so that braking performance on snow is improved. Furthermore, the angle formed by the second secondary grooves 22 with respect to the tire width direction is larger than that of the second groove portions 18, so compared to the second groove portions 18 the second secondary grooves 22 can exhibit an edge effect with respect to input in the tire width direction. Because of this, maneuverability on snow is improved.

Furthermore, in the tire 10, by setting in the range of 60 to 90 degrees the angle θ1 formed by the first groove portions 16 with respect to the tire width direction, the edges (open edge portions) of the first groove portions 16 can exhibit a high edge effect with respect to the tire width direction, so maneuverability on snow is improved. Furthermore, by setting in the range of 0 to 20 degrees the angle θ2 formed by the second groove portions 18 with respect to the tire width direction, the edges (open edge portions) of the second groove portions 18 can exhibit a high edge effect with respect to the tire circumferential direction, so acceleration performance on snow and braking performance on snow are improved.

In the tire 10, the second primary grooves 24 are disposed in the tread 12 between the first primary grooves 14 adjacent thereto in the tire circumferential direction, so when traveling on snow-covered road surfaces, performance on snow is improved by the shearing force of the snow ridges formed by the second primary grooves 24. Furthermore, the third secondary grooves 26 extend in the opposite direction from the tire rotational direction from the inner end portions 24A of the second primary grooves 24 and intersect the first groove portions 16 of the first primary grooves 14 adjacent thereto in the opposite direction from the tire rotational direction, so when traveling on snow-covered road surfaces, snow ridges straddling the first groove portions 16 and the third secondary grooves 26 can be formed. Because of the shearing force of these snow ridges, acceleration performance on snow and braking performance on snow are improved.

Furthermore, in the tire 10, the third secondary grooves 26 extend in a normal line direction of the first groove portions 16 of the first primary grooves 14 adjacent thereto in the opposite direction from the tire rotational direction, so the rigidity of the land portion corner portions (the corner portions of the rib-shaped land portion 30) formed between the third secondary grooves 26 and the first groove portions 16 intersecting the third secondary grooves 26 can be ensured. Because of this, the ground contact of the rib-shaped land portion 30 formed between the third secondary grooves 26 and the first groove portions 16 intersecting the third secondary grooves 26 is improved and maneuverability on snow is improved.

In the tire 10, the second primary grooves 24 intersect the second secondary grooves 22 extending from the first primary grooves 14 adjacent thereto in the tire rotational direction, so when traveling on snow-covered road surfaces, snow ridges straddling the second primary grooves 24 and the second secondary grooves 22 intersecting the second primary grooves 24 can be formed. Because of the shearing force of these snow ridges, acceleration performance on snow and braking performance on snow are improved.

In the tire 10, the sipes 40 are disposed in the rib-shaped land portion 30, the sipes 42 are disposed in the rib-shaped land portions 32, and the sipes 44 are disposed in the rib-shaped land portions 34, so braking and acceleration on ice- and snow-covered road surfaces is improved by the edge effect of the sipes.

In the tire 10, the rib-shaped land portion 30 continuous in the tire circumferential direction is formed in the tread center portion 12C and particularly on the tire equator CL, so the ground contact area of the tread center portion 12C whose ground contact length is the longest in the tread 12 increases, and maneuverability on snow is improved. Furthermore, by disposing the sipes 40 in the rib-shaped land portion 30, a high edge effect is obtained.

Moreover, in the tire 10, the first primary grooves 14 on one side in the tire width direction and the first primary grooves 14 on the other side in the tire width direction are arranged a half pitch offset from each other in the tire circumferential direction, so a balanced edge effect resulting from the first primary grooves 14 on both sides of the tire equator CL can be produced.

As described above, according to the tire 10, performance on snow (acceleration performance on snow, braking performance on snow, and maneuverability on snow) can be improved.

The present invention has been described by way of embodiments above, but these embodiments are examples and can be changed and implemented in a variety of ways without departing from their spirit. Furthermore, it goes without saying that the scope of rights of the present invention is not limited to these embodiments.

The disclosure of Japanese Patent Application No. 2014-005385 filed on January 15, 2014 is incorporated in its entirety by reference herein.

All documents, patent applications, and technical standards mentioned in this specification are incorporated by reference herein to the same extent as if each individual document, patent application, or technical standard were specifically and individually indicated to be incorporated by reference.

## Claims

1. A pneumatic tire (10) having a specified rotational direction (R) and comprising:
a plurality of first primary grooves (14) that are disposed in a tread (12) and are spaced apart from each other in a tire circumferential direction (Y), each of the first primary grooves (14) having:
a first groove portion (16) that extends in an opposite direction from the tire rotational direction (R) and obliquely with respect to a tire width direction (X) from an inner end portion (14A) positioned in a tread center portion (12C), and
a second groove portion (18) that extends outward in the tire width direction (X) from the first groove portion (16) to a tread end (12E) such that an angle (θ2) formed by the second groove portion (18) with respect to the tire width direction (X) becomes smaller than an angle (θ1) formed by the first groove portion (16) with respect to the tire width direction (X); first secondary grooves (20) that are disposed in the tread (12), extend in the opposite direction from the tire rotational direction (R) from the first groove portions (16) in directions along normal lines (16NL) of the groove centerlines (16CL) of the first groove portions (16) or directions inclined in a range of ±10 degrees with respect to those normal lines (16NL), and terminate in the tread center portion (12C);
second secondary grooves (22) that are disposed in the tread (12), extend in the opposite direction from the tire rotational direction (R) from the second groove portions (18) toward the tread ends (12E), terminate without reaching the first primary grooves (14) adjacent thereto in the opposite direction from the tire rotational direction (R), and whose angle (θ4) with respect to the tire width direction (X) is larger than that of the second groove portions (18);
second primary grooves (24) that are disposed in the tread (12) between first primary grooves (14) adjacent thereto in the tire circumferential direction (Y), and that extend in the opposite direction from the tire rotational direction (R) from inner end portions (24A) positioned in the tread center portion (12C) to the tread ends (12E) while inclining with respect to the tire width direction (X); and
third secondary grooves (26) that are disposed in the tread (12), extend in the opposite direction from the tire rotational direction (R) from the inner end portions (24A) of the second primary grooves (24), and intersect the first groove portions (16) of first primary grooves (14) adjacent thereto in the opposite direction from the tire rotational direction (R),
wherein the second primary grooves (24) intersect the second secondary grooves (22) extending from first primary grooves (14) adjacent thereto in the tire rotational direction (R).

2. The pneumatic tire according to claim 1, wherein the third secondary grooves (26) extend in directions along normal lines (16NL) of the groove centerlines (16CL) of the first groove portions (16) or directions inclined in a range of ±10 degrees with respect to those normal lines (16NL) of the first groove portions (16) of the first primary grooves (14) adjacent thereto in the opposite direction from the tire rotational direction (R).

3. The pneumatic tire according to claim 1 or 2, wherein
the angle (θ1) formed by the first groove portions (16) with respect to the tire width direction (X) is in a range of 60 to 90 degrees, and
the angle (θ2) formed by the second groove portions (18) with respect to the tire width direction (X) is in a range of 0 to 20 degrees.

## Patentansprüche

1. Luftreifen (10), aufweisend eine bestimmte Drehrichtung (R) und umfassend:
eine Mehrzahl von ersten Hauptrillen (14), welche in einer Lauffläche (12) angeordnet sind und welche voneinander in einer Reifenumfangsrichtung (Y) beabstandet sind, wobei jede der ersten Hauptrillen (14) aufweist:
einen ersten Rillenabschnitt (16), welcher sich in einer der Reifendrehrichtung (R) entgegengesetzten Richtung und schräg zu einer Reifenbreitenrichtung (X) von einem inneren Endabschnitt (14A) erstreckt, welcher in einem Laufflächenmittelabschnitt (12C) angeordnet ist, und
einen zweiten Rillenabschnitt (18), welcher sich nach außen in der Reifenbreitenrichtung (X) vom ersten Rillenabschnitt (16) zu einem Laufflächenende (12E) erstreckt, sodass ein Winkel (θ2), welcher vom zweiten Rillenabschnitt (18) mit der Reifenbreitenrichtung (X) gebildet ist, kleiner wird als ein Winkel (θ1), welcher vom ersten Rillenabschnitt (16) mit der Reifenbreitenrichtung (X) gebildet ist; erste Nebenrillen (20), welche in der Lauffläche (12) angeordnet sind, sich in der der Reifendrehrichtung (R) entgegengesetzten Richtung von den ersten Rillenabschnitten (16) in Richtungen entlang Normalen (16NL) der Rillenmittellinien (16CL) der ersten Rillenabschnitte (16) oder in Richtungen, welche in einem Winkelbereich von + 10 Grad relativ zu diesen Normalen (16NL) erstrecken und im Laufflächenmittelabschnitt (12C) enden;
zweite Nebenrillen (22), welche in der Lauffläche (12) angeordnet sind, sich in der der Reifendrehrichtung (R) entgegengesetzten Richtung von den zweiten Rillenabschnitten (18) zu den Laufflächenenden (12E) hin erstrecken, unterbrochen werden, ohne die ersten Hauptrillen (14) zu erreichen, welche an diesen in der der Reifendrehrichtung (R) entgegengesetzten Richtung angrenzen, und deren Winkel (θ4) relativ zur Reifenbreitenrichtung (X) größer ist als der Winkel der zweiten Rillenabschnitte (18);
zweite Hauptrillen (24), welche in der Lauffläche (12) zwischen ersten Hauptrillen (14), angeordnet sind, welche an diesen in der Reifenumfangsrichtung (Y) anliegen, und sich in der der Reifendrehrichtung (R) entgegengesetzten Richtung von inneren Endabschnitten (24A), welche im Laufflächenmittelabschnitt (12C) angeordnet sind, zu den Laufflächenenden (12E) erstreckenwährend sie sich relativ zur Reifenbreitenrichtung (X) neigen; und
dritte Nebenrillen (26), welche in der Lauffläche (12) angeordnet sind, sich in der der Reifendrehrichtung entgegengesetzten Richtung von den inneren Endabschnitten (24A) der zweiten Hauptrillen (24) erstrecken und die ersten Rillenabschnitte (16) von ersten daran angrenzenden Hauptrillen (14) in der der Reifendrehrichtung (R) entgegengesetzten Richtung schneiden,
wobei die zweiten Hauptrillen (24) die zweiten Nebenrillen (22) schneiden, welche sich von den ersten Hauptrillen (14) erstrecken, die in der Reifendrehrichtung (R) daran angrenzen.

2. Luftreifen nach Anspruch 1, wobei die dritten Nebenrillen (26) sich in Richtungen entlang Normalen (16NL) der Rillenmittellinien (16CL) der ersten Rillenabschnitte (16) erstrecken oder in Richtungen, welche innerhalb eines Bereichs von + 10 Grad relativ zu diesen Normalen (16NL) der ersten Rillenabschnitte (16) der ersten Hauptrillen (14) geneigt sind, die in der der Reifendrehrichtung (R) entgegengesetzten Richtung daran angrenzen.

3. Luftreifen nach Anspruch 1 oder 2, wobei
der Winkel (θ1), welcher von den ersten Rillenabschnitten (16) relativ zur Reifenbreitenrichtung (X) gebildet wird, sich in einem Bereich zwischen 60 und 90 Grad befindet, und
der Winkel (θ2), welcher von den zweiten Rillenabschnitten (18) relativ zur Reifenbreitenrichtung (X) gebildet wird, sich in einem Bereich zwischen 0 und 20 Grad befindet.

## Revendications

1. Bandage pneumatique (10) ayant une direction de rotation spécifiée (R) et comprenant :
plusieurs premières rainures primaires (14) disposées dans une bande de roulement (12) et espacées les unes des autres dans une direction circonférentielle du bandage pneumatique (Y), chacune des premières rainures primaires (14) comportant :
une première partie de rainure (16) s'étendant dans une direction opposée à la direction de rotation du bandage pneumatique (R) et de manière oblique par rapport à une direction de la largeur du bandage pneumatique (X), à partir d'une partie d'extrémité interne (14A) positionnée dans une partie centrale de la bande de roulement (12C) ; et
une deuxième partie de rainure (18) s'étendant vers l'extérieur, dans la direction de la largeur du bandage pneumatique (X), de la première partie de rainure (16) vers une extrémité de la bande de roulement (12E), de sorte qu'un angle (θ2) formé par la deuxième partie de rainure (18) par rapport à la direction de la largeur du bandage pneumatique (X) est réduit par rapport à un angle (θ1) formé par la première partie de rainure (16) par rapport à la direction de la largeur du bandage pneumatique (X) ; des premières rainures secondaires (20) disposées dans la bande de roulement (2) s'étendant dans la direction opposée à la direction de rotation du bandage pneumatique (R), à partir des premières parties de rainure (16), dans des directions le long de lignes normales (16NL) des lignes médianes de rainure (16CL) des premières parties de rainure (16), ou dans des directions inclinées dans un intervalle de ± 10 degrés par rapport à ces lignes normales (16NL) et se terminant dans la partie centrale de la bande de roulement (12C) ;
des deuxièmes rainures secondaires (22) disposées dans la bande de roulement (12) s'étendant dans la direction opposée à la direction de rotation du bandage pneumatique (R),des deuxièmes parties de rainure (18) vers les extrémités de la bande de roulement (12 E), se terminant sans atteindre les premières rainures primaires (14) qui y sont adjacentes dans la direction opposée à la direction de rotation du bandage pneumatique (R), et dont l'angle (θ4) par rapport à la direction de la largeur du bandage pneumatique (X) est supérieur à celui des deuxièmes parties de rainure (18) ;
des deuxièmes rainures primaires (24) disposées dans la bande de roulement (12), entre les premières parties de rainure (14) qui y sont adjacentes dans la direction circonférentielle du bandage pneumatique (Y), et s'étendant dans la direction opposée à la direction de rotation du bandage pneumatique (R), des parties d'extrémité internes (24A) positionnées dans la partie centrale de la bande de roulement (12C) vers les extrémités de la bande de roulement (12 E), tout en étant inclinées par rapport à la direction de la largeur du bandage pneumatique (X) ; et
des troisièmes rainures secondaires (26) disposées dans la bande de roulement (12) s'étendant dans la direction opposée à la direction de rotation du bandage pneumatique (R), des parties d'extrémité internes (24A) des deuxièmes rainures primaires (24), et coupant les premières parties de rainure (16) des premières rainures primaires (14) qui y sont adjacentes dans la direction opposée à la direction de rotation du bandage pneumatique (R) ;
dans lequel les deuxièmes rainures primaires (24) coupent les deuxièmes rainures secondaires (22) s'étendant à partir de premières rainures primaires (14) qui y sont adjacentes dans la direction de rotation du bandage pneumatique (R).

2. Bandage pneumatique selon la revendication 1, dans lequel les troisièmes rainures secondaires (26) s'étendent dans des directions le long de lignes normales (16NL) des lignes médianes de rainure (16CL) des premières parties de rainure (16), ou dans des directions inclinées dans un intervalle de ± 10 degrés par rapport à ces lignes normales (16NL) des premières parties de rainure (16) des premières rainures primaires (14) qui y sont adjacentes dans la direction opposée à la direction de rotation du bandage pneumatique (R).

3. Bandage pneumatique selon les revendications 1 ou 2, dans lequel
l'angle (θ1) formé par les premières parties de rainure (16) par rapport à la direction de la largeur du bandage pneumatique (X) est compris dans l'intervalle allant de 60 à 90 degrés ; et
l'angle (θ2) formé par les deuxièmes parties de rainure (18) par rapport à la direction de la largeur du bandage pneumatique (X) est compris dans un intervalle allant de 0 à 20 degrés.
